(19) Europäisches Patentamt
European Patent Office
Office européen des brevets

(11) EP 2 302 367 B1

(12) FASCICULE DE BREVET EUROPEEN

(45) Date de publication et mention
de la délivrance du brevet:
**29.03.2017 Bulletin 2017/13**

(51) Int Cl.:
*G01N 21/64* *(2006.01)*     *G01N 21/77* *(2006.01)*

(21) Numéro de dépôt: **10181377.2**

(22) Date de dépôt: **21.08.2001**

(54) **Dispositif de support d'éléments chromophores**

Trägervorrichtung für chromophore Elemente

Device for supporting chromophoric elements

(84) Etats contractants désignés:
**AT BE CH CY DE DK ES FI FR GB GR IE IT LI LU MC NL PT SE TR**

(30) Priorité: **21.08.2000 FR 0010771**

(43) Date de publication de la demande:
**30.03.2011 Bulletin 2011/13**

(62) Numéro(s) de document de la (des) demande(s)
initiale(s) en application de l'article 76 CBE:
**01965336.9 / 1 311 830**

(73) Titulaire: **Genewave**
**75011 Paris (FR)**

(72) Inventeurs:
• **Weisbuch, Claude**
**75013 Paris (FR)**
• **Benisty, Henri**
**91120 Palaiseau (FR)**

(74) Mandataire: **Jacobacci Coralis Harle**
**14-16, rue Ballu**
**75009 Paris (FR)**

(56) Documents cités:
WO-A-00/12123     WO-A1-99/27140
DE-A1- 19 842 153     JP-A- 2000 019 099
US-A- 4 647 544     US-A- 5 255 067

**EP 2 302 367 B1**

**Description**

La présente invention vise l'amélioration de la détection de signaux chromophores ou chromogéniques liés directement ou indirectement à des cellules, molécules ou macromolécules, chimiques ou biologiques, fixées à des supports.

On entend par "signal chromophore" ou "signal chromogénique", tout signal lumineux émis directement, ou indirectement après excitation par une lumière appropriée ou après transformation enzymatique d'un substrat chromogénique. Ainsi, entrent notamment dans la catégorie des signaux chromophores ou chromogéniques les signaux colorimétriques, photoluminescents, fluorescents, chimioluminescents, bioluminescents et analogues. Ces signaux sont émis soit directement par les molécules d'intérêt, soit par des éléments qui leur sont rajoutés et/ou greffés, tels que, par exemple, les molécules de colorant ou certains types de nanostructures semiconductrices tels que les fils ou les boites quantiques.

Les technologies utilisées en biologie cellulaire et moléculaire, pour détecter et quantifier la présence d'une molécule, font appel le plus souvent à ce type de signaux, qui sont détectés par des spectromètres, fluorimètres ou luminomètres, munis de photomultiplicateurs.

Par « molécule » on entend ici tout type de molécule ou macromolécule, isolée ou liée à une structure ou à une autre molécule. A titre d'exemple on peut citer des acides nucléiques ou des oligonucléotides, des protéines ou des séquences polypeptidiques, des anticorps ou fragments de ceux-ci. On peut entendre également par « molécule » les molécules chimiques présentant une affinité particulière pour un ligand spécifique. A titre d'exemple, on peut évoquer les molécules obtenues dans le cadre de synthèses à haut débit et leur sélection par les techniques de chimie combinatoire.

L'accessibilité de la matière biologique et la recherche de la présence d'une molécule particulière dans un mélange complexe ont conduit à la mise au point de techniques miniaturisées qui mettent en oeuvre des "puces", "micro-réseaux" ou "macro-réseaux", ces deux derniers éléments étant plus connus sous les noms anglais "micro-arrays" et "macro-arrays". Les molécules dont on souhaite rechercher la présence ou que l'on souhaite quantifier (les cibles), sont mises en présence de ligands spécifiques connus (les sondes) fixées sur un support ou un substrat qui, aujourd'hui, est généralement en verre, en silice, en nylon ou encore en métal. La détection d'une cible est alors assurée par son couplage à une sonde fixe (ou ligand spécifique), du fait que la cible est porteuse d'un chromophore (il peut arriver que ce soit la sonde qui porte le chromophore).

Par « support » ou « substrat » on entend ici tout moyen permettant de supporter des éléments chromophores. Par conséquent, il pourra s'agir d'une structure monocouche ou bien d'une structure multicouches. La monocouche ou l'une des couches du multicouches peut être un substrat vendu dans le commerce et éventuellement modifié.

Les arrangements respectifs des cibles, sondes et chromophores peuvent être interchangés. Ainsi, dans ce qui suit et précède, il est question de sondes solidarisées à un support et avec lesquelles viennent interagir des cibles, mais les cibles pourraient être solidarisées au support, les sondes venant alors interagir avec celles-ci.

La fixation des sondes sur leurs supports peut être effectuée de différentes manières. On citera par exemple l'adressage par voie chimique, l'adressage par voie électrochimique, ou l'adressage utilisant une technologie similaire à la technologie des jets d'encre mise en oeuvre dans les imprimantes.

Pour une revue détaillée de ce sujet, on pourra se référer, notamment, à l'article de F. Bertucci et al., Human molecular genetics (1999) 8, n° 9, pp. 1715-1722.

La sensibilité des moyens de détection utilisés aujourd'hui nécessite la présence d'au moins $10^4$ molécules d'une même catégorie pour l'obtention d'une réponse significative. De plus, les sondes devenant toujours plus nombreuses sur des supports de très petites dimensions, il devient particulièrement difficile de détecter l'origine des signaux luminescents ou colorimétriques générés après couplage ou hybridation sonde/cible.

Les solutions classiques mises en oeuvre pour améliorer la sensibilité des mesures ont jusqu'à présent consisté à augmenter soit le signal émis, par exemple en utilisant des cibles radioactives, soit la quantité de matériel pouvant être hybridé ou couplé. Mais, ces solutions ne sont pas satisfaisantes.

D'autres solutions nécessitent des systèmes optiques à très grande ouverture numérique et/ou à immersion, peu compatibles avec les besoins de balayage rapide des grands réseaux (ou «arrays»).

On connaît, par le document US-A-6.008.892, un dispositif de support d'éléments chromophores qui comprend une base rigide à surface réfléchissante, notamment en métal, recouverte d'une couche transparente, par exemple de silice, sur laquelle sont fixés des éléments chromophores. Le chemin optique entre la surface réfléchissante de la base et la face supérieure de la couche transparente, est un multiple impair du quart de la longueur d'onde de la lumière d'excitation des éléments chromophores, de sorte que l'onde stationnaire de la lumière d'excitation incidente présente un ventre au niveau des éléments chromophores. L'excitation des chromophores est alors maximale. La base réfléchissante permet aussi d'augmenter la collecte de la fluorescence émise en réponse à l'excitation, en doublant presque l'angle solide de collecte de la fluorescence par un système à microscope.

La présente invention a notamment pour but d'améliorer encore la détection de la lumière émise par les éléments

2

chromophores en réponse à une excitation lumineuse.

Elle a pour objet à cet effet un dispositif de support d'éléments chromophores du type précité, qui permette de concentrer une partie au moins de la lumière émise par les éléments chromophores dans une partie choisie de l'espace, pour qu'elle puisse être captée. On entend ici par « concentrer » le fait, tout d'abord, de récupérer la lumière qui est émise par les éléments chromophores dans une partie de la région qui les environne, puis, de contraindre cette lumière récupérée à gagner une ou plusieurs zones de collecte.

L'invention propose à cet effet un dispositif de support d'au moins un élément chromophore, tel que défini dans la revendication 1.

Le dispositif selon l'invention prévoit donc de modifier l'environnement optique de chaque élément chromophore de sorte qu'une plus grande proportion de la lumière qu'il émet soit collectée. Le rendement s'en trouve accru, tout comme la sensibilité des tests de détection des molécules.

Cette invention permet en outre une amélioration de la réjection de la lumière excitatrice collectée dans le détecteur, et par conséquent une amélioration du rapport signal/bruit (S/B).

L'invention permet également un renforcement de l'excitation optique des chromophores en complément du renforcement de la collecte de la lumière émise par lesdits chromophores.

De nombreux modes de réalisation peuvent être envisagés selon que la modification de l'environnement du chromophore repose sur un effet d'optique géométrique et/ou d'optique ondulatoire.

Dans le domaine de l'optique géométrique, où la propagation des rayonnements émis et/ou incidents (rayonnement d'excitation) est régie par les lois de l'optique géométrique, on peut prévoir, par exemple :

- un premier miroir dit « lointain », solidarisé à (ou formé dans) un substrat à une distance (d) des chromophores, grande devant la longueur d'onde d'émission ($\lambda$), c'est-à-dire vérifiant le critère $d > n\lambda/2NA^2$ (où « NA » est l'ouverture numérique de l'objectif de collecte et « n » l'indice du milieu entre le miroir et les chromophores), et destiné à réfléchir la lumière émise par les éléments chromophores vers la partie choisie de l'espace. Le premier miroir lointain peut être réalisé sous la forme d'un empilement de couches diélectriques ;
- des microlentilles associées chacune à un élément chromophore, et pouvant fonctionner en transmission ou en réflexion, c'est-à-dire en focalisant vers l'avant ou vers l'arrière, comme c'est le cas, notamment, d'un miroir de Fresnel ;
- des petites cuvettes, remplies de matériau d'indice adéquat (de préférence élevé) et dont le fond est réfléchissant, et propres à recevoir chacune, sur ce matériau de remplissage, au moins un élément chromophore ;
- des moyens de diffraction fonctionnant en transmission ou en réflexion et placés à une distance choisie des éléments chromophores ;
- si l'émission des chromophores a lieu dans un guide d'onde planaire (les chromophores n'étant pas forcément placés dans le guide), des rainures définissant un réseau blazé, de manière à collecter la lumière émise par les éléments chromophores en direction des moyens de support et à guider cette lumière vers le dispositif de collecte ;
- des structures linéaires parallèles, réalisées dans la face supérieure avant d'un substrat sous la forme de rainures (ou sillons) ou de nervures, de type en U ou en V ou parabolique, remplies de matériau d'indice adéquat, dotées d'un fond réfléchissant, et propres à recevoir sur ce matériau de remplissage (entre elles, en leurs sommets ou en leurs centres) au moins un élément chromophore ;
- un guide d'onde planaire destiné à acheminer une lumière d'excitation des chromophores en minimisant la diffusion de cette lumière dans les milieux environnants ;
- en l'absence d'un guide d'onde de collecte, on peut prévoir une matrice d'éléments de détection de lumière par couplage de charge (CCD), associée à la face arrière du substrat, certains au moins des éléments de détection étant adressés électroniquement en correspondance d'au moins un élément chromophore. Dans ce cas, on pourra avantageusement prévoir, entre la matrice et le substrat, une couche formant miroir interférentiel agencé de manière à rejeter la lumière d'excitation des éléments chromophores. On peut aussi coupler les pixels d'un détecteur CCD soit à des sites portant des éléments chromophores actifs ou vides ou encore non actifs, soit à des sites ayant un signal d'activité de référence, de façon à obtenir par une mesure différentielle sur les pixels du détecteur CCD le signal du chromophore actif avec un rapport S/B accru, par soustraction du bruit de fond et du signal d'excitation parasite.

Dans le domaine de l'optique ondulatoire, où l'on utilise des phénomènes d'interférence pour renforcer ou diminuer des ondes optiques, on peut prévoir, par exemple :

- un premier réflecteur (ou miroir) dit « proche », analogue à celui de l'optique géométrique mais placé à une distance (d) des chromophores telle que ledit réflecteur assure un effet d'interférence permettant une amplification de la collecte de la lumière émise dans le support (d vérifiant la relation : $d < n\lambda/2NA^2$), et couplé à des ondes excitatrices parvenant sur les chromophores sous une incidence non nulle par rapport à la normale au support. Cette incidence assure en complément un renforcement de l'excitation lorsqu'il existe une double résonance, c'est-à-dire une coïncidence des ventres du champ pour les deux longueurs d'onde d'excitation ($\lambda$exc) et d'émission ($\lambda$ émis). La détection demeure centrée sur la normale au support ;

- ce premier miroir, placé sous les éléments chromophores, peut être combiné à un second miroir semi-réfléchissant placé au-dessus de ces éléments chromophores, sensiblement parallèlement au premier miroir et à une distance choisie de celui-ci de manière à définir une cavité résonante asymétrique, en particulier de type Fabry-Pérot, délivrant la lumière collectée au travers du second miroir. En variante, le second miroir ou miroir de sortie peut être en dessous et le miroir le plus réfléchissant à la longueur d'onde émise au-dessus, ce dernier pouvant être largement transparent à la longueur d'onde d'excitation. De façon générale, dans les deux cas, on peut satisfaire une condition de double résonance analogue à celle du miroir proche, en prenant comme distance d celle qui sépare les chromophores du miroir le plus réfléchissant. Le second miroir peut être déposé directement soit sur le substrat, soit sur la face d'entrée d'une optique collectrice, soit encore être constitué par le dioptre d'une face d'entrée existante ;

- un guide d'onde planaire capturant une fraction importante de la lumière des chromophores émise dans le support, et préférentiellement pourvu des moyens mentionnés ci-dessus pour permettre l'acheminement de la lumière capturée vers le dispositif de collecte ;

- un résonateur planaire formé dans le substrat autour de chaque élément chromophore, destiné à stocker l'énergie électromagnétique du champ qu'il induit et agencé de sorte que l'élément chromophore associé soit sensiblement placé sur un ventre du champ électromagnétique. Il pourra s'agir de rainures ou sillons circulaires concentriques (au moins deux) au centre desquelles est placé un élément chromophore. Il pourra également s'agir de rainures ou sillons rectangulaires ou parallèles définissant un réseau lamellaire;

- un réseau bidimensionnel (2D) ou tridimensionnel (3D) de trous ou de colonnes, définissant un cristal photonique, de préférence à bande photonique interdite de manière à contrôler la propagation de la lumière dans sa région, ce qui peut aller jusqu'à l'interdire ;

- des moyens de concentration de lumière qui provoquent des résonances localisées par renforcement local du champ électromagnétique induit par la présence de structures nanométriques (par exemple des îlots), régulières ou non, ou de trous nanométriques, réalisés dans des métaux choisis, en particulier en argent (Ag). Ces îlots ou trous nanométriques sont capables d'augmenter l'émission, et accessoirement l'excitation, comme dans la diffusion Raman de surface augmentée, en particulier de type SERS ;

- des moyens de concentration de lumière comportant une cavité résonante asymétrique, en particulier de type Fabry-Pérot, intégrée dans un substrat au-dessous de sa couche supérieure, celle-ci étant au moins partiellement perméable, verticalement et/ou latéralement, de manière à permettre la migration des éléments chromophores vers des sites choisis relativement à la cavité résonante. Cette cavité est, de préférence, définie par des premier et second miroirs, et la couche supérieure est préférentiellement réalisée dans un matériau poreux, par exemple en Silicagel. Par ailleurs, la couche supérieure peut comporter des trous en des endroits choisis, de manière à favoriser la migration des éléments chromophores vers les sites.

Certains des exemples présentés ci-avant pourront être pris en combinaison, de manière à améliorer encore la collecte de la lumière.

L'invention concerne tous les domaines dans lesquels peut être utilisé le dispositif tel que défini dans la revendication 1, et notamment dans les domaines de la biologie, de la biochimie et de la chimie.

Elle concerne plus particulièrement l'utilisation d'un dispositif du type de celui présenté ci-avant pour la mise en oeuvre de biopuces destinées à permettre, notamment, la détection d'appariements d'oligonucléotides cible et sonde, tels que des brins d'ADN, la détection d'interaction entre des protéines ou des séquences polypeptidiques cibles, marquées avec une molécule apte à émettre directement ou indirectement des signaux chromophores ou chromogéniques, en particulier des signaux luminescents, fluorescents ou colorimétriques, et des protéines ou des séquences polypeptidiques sondes, et la détection d'interaction entre des molécules chimiques sondes et des molécules chimiques cibles.

D'autres caractéristiques et avantages de l'invention apparaîtront à l'examen de la description détaillée ci-après, et des dessins annexés, sur lesquels :

- la figure 1 est une vue en coupe très schématique d'un dispositif donné à titre d'exemple, à miroir lointain formé uniquement de couches diélectriques, ou d'hybrides à couches diélectriques et métalliques,
- les figures 2A et 2B sont des vues en coupe très schématiques de dispositifs donnés à titre d'exemple, à cuvettes miroir,

- la figure 3A est une vue en coupe très schématique d'un dispositif donné à titre d'exemple à miroir « proche » couplé à une excitation sous incidence non nulle, les courbes des figures 3B et 3C illustrant respectivement les courbes d'intensité de luminescence ($|E_{fluo}(Z)|^2$) et d'excitation ($|E_{exc}(Z)|^2$) en fonction de la cote (ou épaisseur) z,
- les figures 4A et Ab sont des vues en coupe très schématiques de dispositifs donnés à titre d'exemple à cavité résonante,
- la figure 5 est une vue en coupe très schématique d'un dispositif donné à titre d'exemple à résonateur planaire en sillons,
- la figure 6 est une vue en coupe très schématique d'un dispositif donné à titre d'exemple, à résonateur planaire et guide d'onde,
- la figure 7 est une vue en coupe très schématique d'un dispositif donné à titre d'exemple, à structure en sillons, couplée à des éléments de détection de type CCD.
- les figures 8 à 10 sont des vues en coupe très schématiques de différentes variantes de réalisation du dispositif selon l'invention, les figures 11 à 14 sont des vues en couple très schématiques de différents exemples,
- la figure 15 est une vue très schématique de dessus du dispositif de la figure 14.

Les dessins annexés sont, pour l'essentiel, de caractère certain. En conséquence, ils pourront non seulement servir à compléter l'invention, mais aussi contribuer à sa définition, le cas échéant.

Dans la description qui suit, il sera fait référence à des dispositifs de support d'éléments chromophores comprenant au moins un support sur lequel est aménagée une multiplicité de zones propres à recevoir des sondes que l'on souhaite coupler à des cibles. Dans l'application décrite, les cibles et les sondes sont des oligonucléotides tels que des brins d'ADN. Mais l'invention ne se limite pas à cette application, les cibles et les sondes pouvant être des protéines ou des séquences polypeptidiques, ou de façon plus générale tout type de molécule chimique, biochimique ou biologique.

Le dispositif selon l'invention est destiné à récupérer une partie au moins des photons de lumière qui sont émis par des éléments chromophores dans une partie de la région qui les environne, de sorte qu'ils soient délivrés dans une partie choisie de l'espace où se trouve placé un dispositif de collecte, tel qu'un objectif de microscope couplé à un photodétecteur, comme par exemple un photomultiplicateur ou une matrice d'éléments photodétecteurs, par exemple du type CCD (Charge Coupled Device).

Afin de récupérer les photons, le dispositif de support peut comprendre des moyens de concentration de lumière qui peuvent être classés dans deux catégories différentes selon qu'ils fonctionnent selon les lois de l'optique ondulatoire ou de l'optique géométrique.

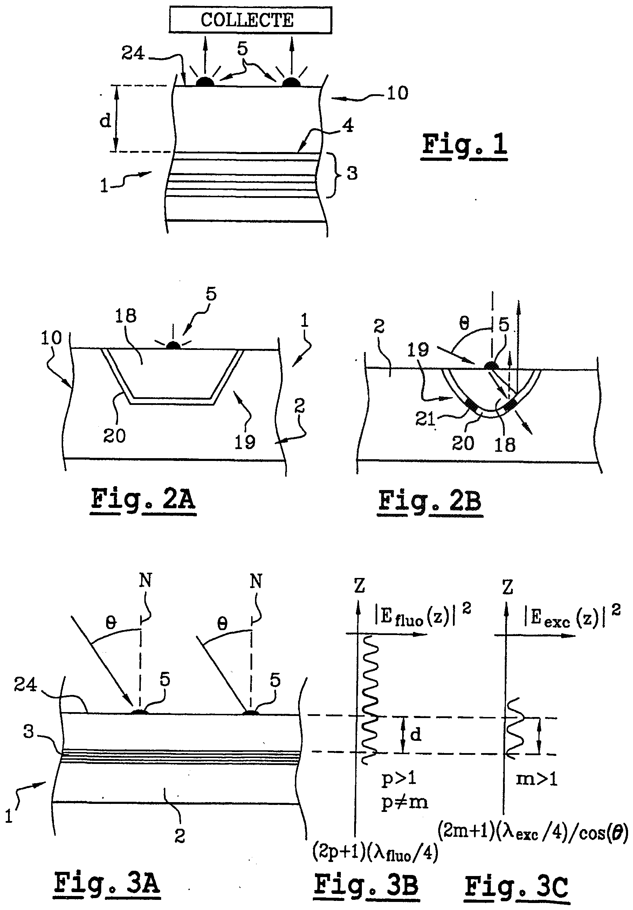

On se réfère tout d'abord à la figure 1 pour décrire un exemple d'un dispositif selon l'invention fonctionnant selon les lois de l'optique géométrique.

Le dispositif comprend un support 1 formé d'un substrat 2 dans lequel est formé un miroir réfléchissant 3 à une distance (d) de sa face supérieure 24. Le miroir peut être formé par dépôt d'une couche hautement réfléchissante aux longueurs d'onde de travail (longueurs d'onde d'émission des chromophores). En variante et comme illustré, le miroir est constitué d'une multiplicité de couches diélectriques 3. Le substrat 2 et les couches diélectriques 3 peuvent être réalisés dans des matériaux semi-conducteurs ou des oxydes ou des verres. Par exemple, on peut choisir, pour une longueur d'onde d'émission ($\lambda$émis) de l'ordre de 600 nm, des couches de $SiO_2$ (présentant un indice de réfraction n1=1,5) d'épaisseur e1 = $\lambda/4n1$ = 100 nm, et des couches de $TiO_2$ (présentant un indice de réfraction n2=2,5) d'épaisseur e2 = $\lambda/4n2$ = 60 nm. Dans cet exemple, il faut 2 à 10 paires de couches, avec une couche de $SiO_2$ comme couche amont.

Mais d'autres matériaux peuvent être envisagés comme par exemple des nitrures ($Si_3N_4$) ou des polymères organiques ou organométalliques, ces polymères pouvant être soit amorphes (matériau isotrope), soit «orientés» et biréfringents. Pour plus de détails sur les propriétés de réflexion particulièrement avantageuses des couches polymères biréfringentes, notamment du point de vue de l'utilisation des deux polarisations, on pourra se référer aux enseignements de l'article de Weber et al, dans Science vol.287, p.2451, march 31, 2000.

Dans l'exemple illustré, le miroir est dit « lointain » de manière à fonctionner selon les lois de l'optique géométrique. On entend par « miroir lointain » tout type de structure réfléchissante fonctionnant, du fait de son éloignement des chromophores, selon les lois de l'optique géométrique et non pas selon les lois de l'optique ondulatoire (par phénomènes d'interférences). En d'autres termes, le miroir est éloigné des chromophores 5 d'une distance d vérifiant le critère : $d > n\lambda / 2NA^2$,

où « NA » est l'ouverture numérique de l'objectif de collecte de la lumière émise par les chromophores selon la longueur d'onde ($\lambda$), et « n » est l'indice du milieu entre le miroir et les chromophores.

Un tel miroir « lointain », réfléchissant, permet de multiplier par environ deux le nombre de photons collectés sensiblement autour de la direction normale N à la face supérieure 24 du support 1, l'angle d'incidence de la lumière d'excitation sur la face 24 étant quelconque.

Une fois réalisé, le support 1 reçoit, sur sa face supérieure 24, les différentes sondes en des endroits choisis. La fixation des sondes sur le support 1 pourra s'effectuer selon des techniques d'adressage connues de l'homme du métier, lesquelles varient selon la nature des sondes et de la surface supérieure 24 du support 1. Il pourra s'agir, par exemple, d'une technique d'adressage chimique, ou d'adressage électrochimique, ou d'une technique similaire à la technique des jets d'encre utilisée dans le domaine des imprimantes.

Les supports 1 équipés de leurs sondes sont alors mis en relation avec des cibles, par exemple par immersion, de sorte que certaines cibles interagissent avec certaines sondes. On entend ici par interaction, tout type de couplage ou d'hybridation ou encore d'appariement permettant de former de façon relativement durable des couples cible/sonde.

Les cibles sont par exemple, des brins d'ADN munis de marqueurs luminescents. On entend ici par « luminescence » tout type d'émission de lumière, induite ou spontanée, comme par exemple la photoluminescence, la fluorescence, ou la phosphorescence. Dans certaines applications pour lesquelles il n'est pas possible de fixer des marqueurs luminescents sur la cible ou la sonde, la luminescence est assurée localement par les structures sur lesquelles sont fixées les couples cible/sonde. C'est notamment le cas de certaines structures semiconductrices telles que les fils et boîtes quantiques (voir notamment le document Bruchez et al., Science 281, p.2013, 25 sept. 1998), ou des colorants pour lesquels le couple qui s'y fixe agit comme un destructeur ou un amplificateur de la luminescence. Dans ce cas notamment, le substrat (mono ou multi-couches) pourra être réalisé dans des matériaux semiconducteurs.

Dans cette divulgation, on entend donc par « élément chromophore » tout élément capable d'émettre un signal chromophore ou un signal chromogénique, directement, ou indirectement après excitation par une lumière appropriée ou après transformation enzymatique d'un substrat chromogénique. Il pourra donc s'agir soit d'un couple cible/sonde solidarisé à la surface supérieure 24 du support 1 et propre à émettre spontanément ou de façon induite des photons de lumière, soit d'une structure tridimensionnelle qui, une fois associée à un couple cible/sonde, émet de la lumière spontanément ou de façon induite, soit encore un élément solidarisé au substrat et qui une fois associé à un couple cible/sonde change de comportement, émettant bien davantage ou bien moins qu'en l'absence du couple, qu'il s'agisse d'émission spontanée ou induite.

L'invention a donc pour but de favoriser la collecte des photons émis par les chromophores, et notamment tout ou partie de la lumière qui serait émise dans la direction du support 1. Il est rappelé ici qu'environ 70 % de la lumière émise par les chromophores se perd dans le substrat et que les 30 % restants ne sont pas nécessairement captés par le dispositif de collecte, pour des raisons de limitation de l'ouverture de collecte.

En variante, le support 1 du dispositif peut comporter, sensiblement en dessous de chaque chromophore 5, des microlentilles structurées ou non, fonctionnant en transmission ou en réflexion (micromiroir), c'est-à-dire en focalisant vers l'avant ou vers l'arrière, comme c'est le cas, notamment, des miroirs de Fresnel. On peut également utiliser des dispositifs diffractifs placés à des distances suffisamment grandes devant la longueur d'onde de la lumière émise. Dans ces conditions, les moyens de diffraction fonctionnent selon les lois de l'optique géométrique, et leurs caractéristiques (angles d'incidence et d'émergence) sont fixées par les lois des réseaux.

Un exemple particulier de réseau consiste à rediriger la lumière avec un réseau holographique de synthèse (c'est-à-dire résultant du calcul d'une fonction de transfert optique selon les méthodes connues de l'homme de l'art). Pour plus de détails sur l'aptitude de ces réseaux holographiques à rediriger des ondes guidées dans un plan ou hors d'un plan, on pourra se référer à Martinsson et al., IEEE Photon. Techn. Letters 11, 503, 1999, et à Larsson et al., SPIE Proc. 3626, 1999.

On se réfère maintenant aux figures 2A et 2B pour décrire un autre exemple particulièrement intéressant. Dans cet exemple, on forme dans la partie supérieure 10 du support 1, des petites cuvettes (ou reliefs tridimensionnels) 19. De tels reliefs peuvent être réalisés selon différentes techniques de définition de motifs (comme par exemple les lithographies et sérigraphies, l'exposition par faisceau d'électrons (« e-beam »)), suivies de techniques de formation de reliefs (comme par exemple la gravure chimique ou sèche, par plasma, par faisceau d'ion, par plasma et/ou faisceau d'ions réactifs), mais encore directement par poinçonnage (« embossing »).

Après avoir déposé une couche réfléchissante 20 (ou un ensemble multicouche ayant des propriétés réfléchissantes aux longueurs d'onde d'intérêt) sur le fond de chaque cuvette 19, on la remplit avec un matériau de remplissage 18 d'indice n2, de préférence élevé, puis on place le chromophore 5 sur la surface supérieure du matériau de remplissage 18, sensiblement au foyer (ou centre) de la cuvette 19. Plusieurs (au moins deux) chromophores peuvent être éventuellement placés au-dessus d'une même cuvette.

La nature réfléchissante des structures tridimensionnelles s'obtient par des dépôts métalliques ou diélectriques. Le remplissage des cuvettes se fait à l'aide de toute méthode menant au matériau désiré, de préférence diélectrique. Un remplissage plat peut être envisagé, comme dans le cas d'une résine époxy solidifiant bien à plat, soit par planarisation dans le cas d'un dépôt convexe, soit sans intervention par exemple dans le cas d'un diélectrique concave.

Préférentiellement, comme représenté en figure 2B, les cuvettes 19 sont paraboliques de révolution, le foyer géométrique étant situé à l'emplacement prévu du chromophore (sur le matériau de remplissage 18), de manière à permettre une collecte idéale d'un maximum de lumière émise. En effet, l'émission d'un chromophore placé à quelques nm d'une interface n1/n2 envoie la lumière principalement dans un cône d'angle étalé entre un angle critique $\theta c = \sin^{-1}(n1/n2)$ et $\theta c + 10°$ ou 20°. Pour plus de détails sur ce mécanisme, on pourra se référer aux articles Lukosz, W. & Kunz, R.E. J. Opt. Soc. Am. vol. 67, pp.1615-1619 (1977), Lukosz, W. J. Opt. Soc. Am. vol. 69, pp.1495-1503 (1979), et Lukosz, W., Phys. Rev. B vol. 22, pp. 3030-3038 (1980). La cuvette peut aussi être elliptique de révolution, de façon à former en amont une image réelle du chromophore situé à l'autre foyer, en aval. Des formes de cuvettes de révolution de type facettées peuvent également être envisagées, le facettage étant n-dimensionnel, n étant supérieur ou égal à 1. On peut ainsi envisager de réaliser des cuvettes à facettage tridimensionnel (n=3), lorsque le matériau se prête à des gravures chimiques révélant des plans cristallins préférentiels.

Il est également possible de concentrer la lumière émise avec de simples sillons, par exemple en forme de U ou de V, ou de parabole ou encore d'ellipse.

Dans les exemples précités, il est encore possible d'améliorer la rejection de la lumière d'excitation en omettant de rendre réfléchissantes des régions des cuvettes illuminées par des angles particuliers $\theta$ (y compris à 3 dimensions). Par exemple, pour un faisceau conique de révolution d'angle $\theta$ et de foyer situé à l'emplacement du chromophore, il faut omettre le traitement réflecteur sur un anneau 21, sur une parabole de révolution, et si possible rendre cette région 2 non réfléchissante, non diffusante, mais plutôt absorbante, par exemple. Dans ces conditions, il est possible d'obtenir une rejection forte combinée à un signal élevé en ne rendant réfléchissante que la projection sur la cuvette de cette région angulaire, en fixant un angle d'excitation qui n'est pas dans cette fenêtre angulaire.

La quantité absolue de lumière émise spontanément ou de façon induite par les chromophores 5 augmentant avec l'indice n2 du matériau de remplissage 18 en raison de la plus grande probabilité du canal radiatif, qui est proportionnelle à une puissance de n2, il est donc préférable de choisir des matériaux d'indice n2 élevé.

Pour détecter les photons canalisés, il est particulièrement avantageux d'utiliser des matrices d'éléments photodétecteurs adressées électroniquement, comme par exemple des dispositifs à couplage de charges (plus connus sous l'acronyme anglais CCD pour "Coupled Charged Device") ou des dispositifs formés de détecteurs à technologie MOS (Metal-Oxyde Semiconductor), parmi les moins coûteux des détecteurs matriciels actuellement disponibles.

De façon préférée, ces détecteurs sont utilisés pour former directement le support 1 ou le substrat 2, ce qui évite toute perte de lumière et permet de conserver les rayons inclinés au-delà de l'angle critique de l'interface support-air. Avec un détecteur séparé du support par un milieu de faible indice, tel que l'air, ces rayons seraient totalement réfléchis et n'atteindraient pas le détecteur.

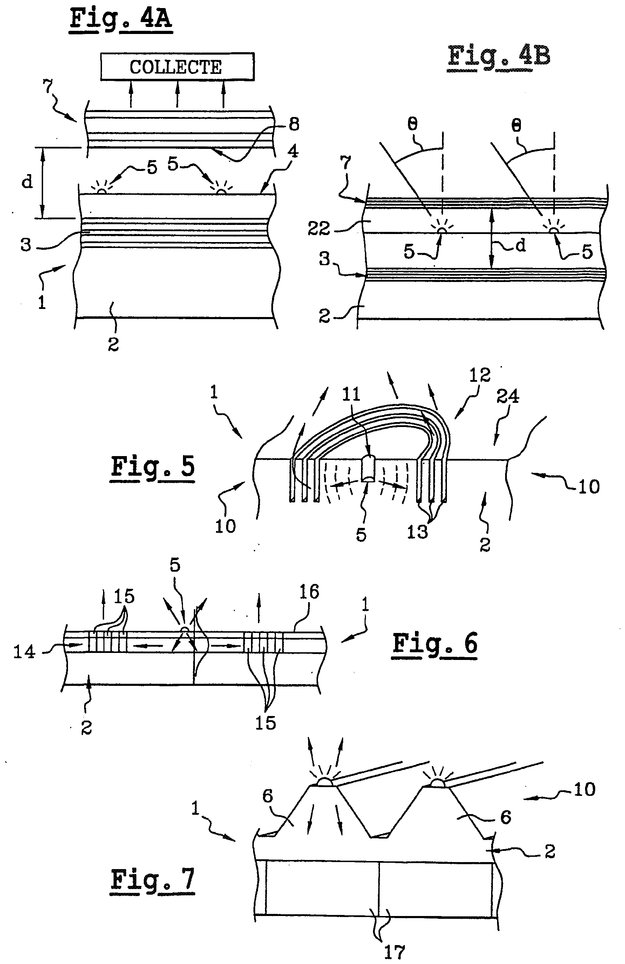

On sait fabriquer des matrices CCD sur un substrat silicium, par exemple, de sorte qu'elles fonctionnent dans les longueurs d'onde visibles, le proche infrarouge, voire le proche ultraviolet. Ces matrices peuvent résister à certains traitements thermiques, fluidiques ou autres, nécessaires à l'élaboration du dispositif selon l'invention. De plus, ces photodétecteurs comportent des éléments photosensibles (ou pixels) (comme illustré sur l'exemple de la figure 7) dont les dimensions peuvent être comprises entre 5 micromètres et 50 micromètres ($\mu$m), et qui, par conséquent, permettent de très fortes densités de sondes sur un même support.

Lorsque la luminescence est induite, il peut s'avérer nécessaire de s'affranchir de la lumière de photo-excitation, celle-ci pouvant saturer (ou aveugler), voire détruire, les éléments de photodétection. Deux solutions peuvent alors être envisagées. Une première solution convient aux cas dans lesquels la luminescence décroît plus lentement que la durée entre deux acquisitions. Dans ces cas, il est possible d'effectuer une photo-excitation pulsée, rapide, pour "vider" les pixels de détection de la matrice CCD avant l'acquisition. Une seconde solution consiste à rajouter des miroirs par exemple interférentiels, ou d'une autre catégorie (des filtres colorés par exemple) ou une combinaison de miroirs de différents types, fortement réjecteurs de la radiation d'excitation (d'une valeur typiquement inférieure à $10^{-4}$, et si possible inférieure à $10^{-5}$), tout en assurant une fenêtre de transmission pour le rayonnement des chromophores 5. Bien entendu, ces deux solutions peuvent être combinées ensemble pour améliorer encore les résultats de collecte.

Cela permet notamment de s'affranchir des microlentilles, ou d'un miroir, tout en conservant la possibilité d'effectuer des fonctions complémentaires, de type filtrage en longueur d'onde, au niveau du dispositif de collecte.

Une amélioration du rapport signal/bruit (S/B) peut, par ailleurs, être obtenue par une méthode différentielle du type de celle décrite ci-après. Un premier pixel de détection est placé en regard de chaque chromophore, et un ou plusieurs autres pixels de détection sont placés à côté de ce premier pixel pour collecter le reste de la lumière émise, qui n'a pas été concentrée par les moyens de l'invention, et les lumières parasites de toutes sortes. Une mesure différentielle du signal reçu par le pixel associé au chromophore et du signal reçu par le ou les pixels voisins donne un meilleur rapport S/B et permet de s'affranchir de diverses sources de bruit et de parasites.

On se réfère maintenant aux figures 3A à 3C pour décrire un autre exemple d'un dispositif, fonctionnant selon les lois de l'optique ondulatoire.

Plus précisément, dans cet exemple on crée une double résonance de manière à obtenir un renforcement de la lumière collectée et de l'excitation. La première résonance concerne la longueur d'onde d'émission tandis que la seconde résonance concerne la longueur d'onde d'excitation. Cette double résonance s'obtient par une détermination de la coïncidence des ventres du champ électrique pour les deux longueurs d'onde d'excitation et d'émission.

On utilise un support 1, du type de celui décrit précédemment en référence à la figure 1, c'est-à-dire comportant un miroir réfléchissant 3 formé de couches diélectriques ou métalliques. Mais, contrairement à l'exemple de la figure 1, dans lequel le miroir est dit lointain, dans ce mode de réalisation le miroir est dit « proche ». En d'autres termes, il est placé à une distance (d) des chromophores qui vérifie le critère : $d < n\lambda /2NA^2$.

Dans ces conditions, il se produit un effet d'interférence qui permet d'augmenter la puissance collectée d'un facteur 4. Pour plus de détails sur ce mécanisme, on pourra se référer, notamment, à l'article de Benisty et al., IEEE J. Quantum Electron. vol.34, 1612, 1998.

Cette condition de miroir proche est combinée à une condition portant sur l'angle d'incidence θ de la lumière d'excitation par rapport à la normale N à la surface supérieure du support 1 (la collecte de la lumière concentrée s'effectuant sensiblement perpendiculairement à la surface supérieure du support 1) .

L'espacement a des ventres du champ à la longueur d'onde λ dans un milieu d'indice n éclairé par une onde dont l'incidence dans le milieu extérieur, d'indice $n_{ext}$, est θ, est donné par :

$$a=(\lambda/2n)/\cos(\arcsin((n_{ext}/n)^*\sin(\theta))).$$

Soit $a_{exc}$, l'espacement des ventres pour une excitation à l'angle θ, et $a_{fluo}$, l'espacement des ventres pour la fluorescence détectée à $\theta_{fluo}$ (généralement autour de 0 degré, mais on peut décaler cet angle au milieu de la fenêtre de collecte de l'objectif, soit : $\sin(\theta_{fluo})=NA/2$.

Le choix de l'angle d'excitation θ (pour un faisceau conique) permet d'ajuster la position spatiale du ventre de la lumière d'excitation (λexc) et d'atteindre une coïncidence spatiale adéquate avec le ventre de la lumière émise (λfluo).

Plus précisément, il faut trouver θ en satisfaisant sensiblement la condition suivante :

$$(p + 1/2)^*a_{exc} = (m + 1/2)^*a_{fluo}$$

avec p et m entiers les plus petits possibles. Ceci se fait en partant d'une valeur de m commode et petite inférieure à 20, et en essayant des valeurs de p inférieures ou égales à $p_0 = m^*(\lambda_{fluo}/\lambda_{exc})$, voire un peu supérieures si les profondeurs de pénétration du miroir varient rapidement avec la longueur d'onde dans le domaine considéré. On trouve des valeurs de θ croissantes au fur et à mesure que p décroît ; on s'arrête au couple (m, p) le plus commode et le plus petit, compte tenu des autres contraintes de fabrication du support.

Pour un meilleur ajustement, il faut aussi tenir compte des profondeurs de pénétration $a_{pen}$ dans les miroirs, qui ne sont pas des miroirs idéaux. Ces profondeurs ne sont qu'une fraction faible de λ pour les métaux, mais sont données par $(\lambda/2n_{moyen})^*(n_{moyen}/(2\Delta n))$ pour un empilement multi-couches du type miroir de Bragg, $n_{moyen}$ étant la moyenne des indices des deux couches et Δn l'écart d'indice entre elles.

La condition exacte à satisfaire pour trouver θ est alors :

$$(p+1/2)^*a_{exc}+a_{pen}(\lambda exc)=(m+1/2)^*a_{fluo}+a_{pen}(\lambda fluo).$$

Il est intéressant de noter que, dans ce cas, l'optimisation des épaisseurs et compositions des couches de renforcement d'absorption ne dépend quasiment pas des ouvertures numériques considérées.

On peut également envisager qu'un ensemble de couches soit antiguidant vis-à-vis du plan des chromophores 5, c'est-à-dire que les modes qui se propagent dans cet ensemble aient moins tendance à capter l'émission lumineuse qu'un substrat de même indice moyen que ces couches. Les photons qui ne sont pas émis dans cet ensemble de couches se retrouvent alors, sensiblement, dans le cône de collecte, surtout lorsque ce cône est assez grand.

On se réfère maintenant à la figure 4A pour décrire un exemple d'un dispositif, fonctionnant selon les lois de l'optique ondulatoire.

Dans cet exemple, on prévoit un support 1 du type de celui décrit précédemment en référence à la figure 3A, c'est-à-dire un substrat 2 comportant un miroir proche, réfléchissant, formé de couches diélectriques 3, par exemple, ainsi qu'un second miroir 7 semi-réfléchissant placé au-dessus des chromophores, à une distance choisie (d) de la surface supérieure 4 du premier miroir. La distance d entre cette surface supérieure 4 du premier miroir et la surface inférieure 8 du second miroir 7, qui lui fait face, est choisie de sorte que les deux miroirs définissent une cavité résonante, de type Fabry-Pérot, asymétrique.

La distance d1 entre le premier miroir et les chromophores est choisie de façon à assurer la présence d'un ventre du champ au niveau des chromophores 5, et vaut donc sensiblement d1 = $(m+1/2)^*\lambda_{fluo} + a_{pen}(\lambda_{fluo})$. On peut aussi choisir l'angle d'excitation θ de la même façon qu'indiqué ci-dessus pour un simple miroir, et choisir la plus favorable des valeurs trouvées de θ en tenant compte des propriétés du second miroir.

Le second miroir 7 semi-réfléchissant permet aux photons émis par les chromophores 5 placés sur la surface supérieure 4 du premier miroir 3, de le traverser, et par conséquent d'être détectés par un dispositif de collecte (placé au-dessus du second miroir 7). Un tel second miroir semi-réfléchissant 7 peut être avantageusement formé par la face inférieure d'un objectif de collecte. Il pourra s'agir directement de cette face ou d'un revêtement déposé sur celle-ci. L'ajustement de la longueur d'onde de résonance par rapport à la longueur d'onde d'émission (ou "tuning") devant être assez précis (de l'ordre de 1 % environ), on peut prévoir un ajusteur sur l'un des éléments du dispositif (par exemple le support ou un miroir extérieur), de type dispositif piézoélectrique asservi à une mesure optique in-situ de la résonance. On peut de plus envisager que cet ajusteur, couplé au dispositif de collecte, soit monté de manière à permettre un balayage de la surface du support 1.

Dans une variante, le second miroir semi-réfléchissant 7 peut être formé sur la face inférieure d'une lamelle, du type de celle utilisée pour les observations microscopiques. Du fait des dimensions très petites des cavités résonantes de type Fabry-Pérot, typiquement $\lambda/2$, on peut placer la lamelle au-dessus des chromophores 5 avec interposition d'un fluide (constitué par exemple par l'échantillon biologique lui-même ou par un liquide mouillant), le contrôle de l'épaisseur de la cavité étant alors effectué par le contrôle de la pression appliquée sur la lamelle, éventuellement couplé à un asservissement optique.

Dans un autre exemple, représenté en figure 4B, on réalise une cavité résonante d'un seul tenant, la couche supérieure et le miroir supérieur 7 étant solidaires du substrat 2, et les sites de positionnement des chromophores 5 étant situés à l'intérieur de la structure en des positions optiquement appropriées, données ci-avant, relativement à la cavité résonante. La cavité résonante est de préférence de type Fabry-Pérot, asymétrique, et plus généralement délimitée par deux miroirs 3, 7 espacés d'une distance d choisie en fonction de la longueur d'onde de travail et des matériaux utilisés, notamment. Ces deux miroirs sont préférentiellement du type de ceux décrits précédemment, c'est-à-dire sous forme de structure multicouches diélectriques.

L'accès des chromophores 5 aux sites internes s'effectue par tout moyen rendant la couche supérieure 22 au moins partiellement perméable, verticalement et/ou latéralement. On peut, par exemple, utiliser des matériaux poreux tels que le Silicagel. Ces matériaux peuvent également comporter des trous, pour faciliter la migration des chromophores vers les sites internes.

On se réfère maintenant à la figure 5 pour décrire un autre exemple d'un dispositif, dans lequel les moyens de concentration de lumière fonctionnent selon les règles de l'optique ondulatoire.

Dans cet exemple, le support 1 est formé d'un substrat 2, dont la surface supérieure 24 comprend une multiplicité de trous 11 destinés, chacun, à recevoir une cible. Les trous permettent de placer les chromophores à des emplacements où le champ du résonateur est maximal. Leur profondeur peut varier entre zéro et la profondeur des sillons du résonateur décrit ci-dessous. Ces trous sont de préférence agencés de façon ordonnée. Pour collecter la lumière émise par le chromophore 5 formé par l'interaction d'une sonde avec une cible logée dans un trou 11, on réalise autour de chaque trou 11 un résonateur planaire 12.

Un tel résonateur peut être par exemple constitué d'une série de rainures (ou sillons) 13 concentriques, débouchant au niveau de la surface supérieure 24 et de largeurs et profondeurs choisies de manière à conférer des propriétés de confinement et d'extraction de la lumière émise en leur centre. Plus précisément, ce résonateur est agencé de sorte que le champ électrique présente un ventre au niveau du trou 11 contenant le chromophore 5 et qu'il stocke l'énergie électromagnétique, la lumière étant récupérée au niveau des rainures 13 (ou sillons) puis transmise dans la partie qui se trouve placée au-dessus de la surface 4, suivant (approximativement) les flèches, en vue d'y être capté par un dispositif de collecte approprié.

La profondeur des sillons peut être de quelques $\mu$m ou égale, voire supérieure, au rayon. La largeur des sillons doit être égale à environ une fraction de la longueur d'onde émise, typiquement de l'ordre de 0,1 $\mu$m.

Le résonateur circulaire a une taille déterminée par la condition suivante :

$$\text{rayon} = (\lambda/2\pi n_{eff})^* z_{m,n}$$

où $z_{m,n}$ est le nième zéro de la fonction de Bessel d'ordre m, $J_m(z)$. Ceci s'entend pour un résonateur à miroir latéral parfait ; neff est le mode de guide planaire sous-jacent s'il y a lieu, sinon c'est l'indice du solide dans lequel est défini le résonateur.

Pour les miroirs du type tranchée, il faut tenir compte de la présence d'un ventre au bord du résonateur, au lieu d'un noeud du champ au bord du résonateur à miroir parfait. Il faut donc rajouter sensiblement un quart de longueur d'onde :

$$\text{rayon} = (\lambda/2\pi n_{eff})^* z_{m,n} + \lambda/(4 n_{eff}).$$

Pour le pas des sillons, il convient, de façon préférée, de choisir un pas sensiblement égal à un multiple de ($\lambda/2\pi$neff), ou très légèrement supérieur (5 à 20%). Ce choix convient avec celui de tranchées de taille très mince, $\lambda/8$ à $\lambda/50$, la limite inférieure étant souvent fixée par la technologie. Cette largeur des sillons contrôle la longueur de pénétration de l'onde dans le "miroir" circulaire.

D'autres types de résonateur planaire peuvent être envisagés. Ainsi, on peut réaliser des réseaux lamellaires avec des sillons rectangulaires ou parallèles présentant des dimensions similaires à celles mentionnées ci-dessus. On peut également réaliser un cristal photonique bidimensionnel, voire tridimensionnel, en réalisant dans le substrat, au niveau de sa partie supérieure 10, des trous ou colonnes évidés, placés en des endroits choisis. Il pourra s'agir, par exemple, de trous ronds formant un réseau triangulaire, avec omission d'un certain nombre d'entre eux pour former la cavité résonante.

De tels résonateurs planaires (sillons concentriques et cristaux photoniques) sont décrits dans le document "Optical and confinement properties of two-dimensional photonic crystals", J. Lightwave Techn., vol. 17, pp. 2063-2077, 1999, H. Benisty, C. Weisbuch, D. Labilloy, M. Rattier, C.J.M. Smith, T.F. Krauss, R.M. De La Rue, R. Houdré, U. Oesterle, et D. Cassagne.

Ces résonateurs planaires, si leurs dimensions sont choisies pour une résonance avec le chromophore 5, présentent des modes résonants qui permettent d'emporter une forte partie de l'émission de ce chromophore. Ces modes résonants sont matérialisés de façon très schématique par les pointillés de la figure 5. De plus, ces résonateurs planaires assurent une diffraction cohérente, similaire à une diffraction de type Bragg, qui permet de rediriger l'énergie du mode résonant vers le dispositif de collecte.

En variante, on peut utiliser un résonateur de très petite taille, typiquement 2 ou 3 $\lambda$ /n. Dans ce cas, le résonateur peut être anti-résonant dans toute la gamme de longueur d'onde du chromophore 5, ce qui inhibe l'émission dans le plan et favorise l'émission à la verticale, c'est-à-dire perpendiculairement à la surface supérieure 24. Un couplage à des éléments photodétecteurs permet alors de collecter la lumière.

Dans le cas des structures de type cristal photonique, on pourra utiliser ceux dits "à bande photonique interdite", qui offrent la propriété d'interdire la propagation de la lumière en leur sein, repoussant ainsi toute l'énergie électromagnétique de la lumière émise par le chromophore 5 en dehors d'eux mêmes, et cela même lorsque le chromophore 5 est situé à une distance de quelques longueurs d'onde ($\lambda$) à l'intérieur du cristal photonique.

Les structures en sillons ou de type cristal photonique, peuvent, lorsqu'elles ne sont plus résonantes, c'est-à-dire lorsqu'elles présentent des tailles ou des rayons supérieurs à environ 10 $\lambda$, être utilisées pour diffracter la lumière guidée du chromophore. Ces structures tendent vers l'optique géométrique et fonctionnent bien pour une certaine variété d'ondes incidentes et non plus pour un ou plusieurs modes privilégiés. Cette configuration offre l'avantage de requérir des tolérances dimensionnelles moins rigoureuses dans le positionnement horizontal des sondes, alors que dans le cas d'un résonateur le ventre visé du champ électrique doit être typiquement d'une taille d'environ $\lambda/2n$, soit inférieur à environ 200 nanomètres.

Les sillons concentriques, les réseaux lamellaires (sillons rectangulaires, parallèles ou en V, et analogues) et les cristaux photoniques présentent tous des fenêtres spectrales/angulaires dans lesquelles leur comportement n'est pas réfléchissant et peut être rendu extracteur. Eventuellement, l'extraction pourra être effectuée au travers du substrat, au dos duquel des microlentilles (fonctionnant selon les lois de l'optique géométrique) peuvent être placées de manière à augmenter la quantité de lumière collectée.

Dans un autre exemple, on crée des résonances localisées du type de celles qui surviennent dans des diffusions Raman de surface augmentées, plus connues sous l'acronyme anglais SERS (pour Surface Enhanced Raman Scattering). Ces résonances résultent d'un renforcement local du champ électromagnétique induit par la présence de structures nanométriques, telles que des îlots nanométriques, ou de trous nanométriques, réalisés dans des métaux particuliers, comme notamment l'argent (Ag) ou l'or (Au). Le renforcement local concerne en premier lieu l'émission, et accessoirement l'excitation. Plus précisément, on peut utiliser ces résonances soit pour renforcer la lumière d'excitation ($\lambda$exc), soit pour coupler la lumière émise par les chromophores ($\lambda$émis) aux moyens de collecte. Pour ce faire, on peut déposer sur un substrat simple, ou structuré comme indiqué précédemment, des films irréguliers d'argent (ou des nanostructures organisées, en argent) sur lesquel(le)s on place les sondes. Pour plus de détails sur ces structures ou trous nanométriques, on pourra se référer, notamment, aux articles de W.L.Barnes et de V.A.Shubin et al, publiés dans IEEE Journal of Lightwave Technology, vol.17, p.21-83, novembre 1999.

On se réfère maintenant à la figure 6 pour décrire un autre exemple d'un dispositif, dans lequel les moyens de concentration de lumière fonctionnent également selon les lois de l'optique ondulatoire.

Dans cet exemple, on prévoit un guide d'onde planaire en dessous de la partie du support où sont fixés les chromophores 5. Pour ce faire, on peut, par exemple, déposer sur la face supérieure d'un substrat 2, de bas indice, une couche de haut indice 14, ce dernier étant également plus élevé que l'indice de la couche supérieure 16 sur laquelle reposent les chromophores 5. Toutefois la structure peut rester guidante en l'absence de la couche supérieure 16, comme le sait l'homme du métier.

Des structures guidantes plus complexes peuvent être envisagées, de manière à positionner les modes guidés de la lumière émise par les chromophores d'une façon particulière, par exemple de sorte que le champ soit le plus fort possible à la surface. Une telle structure peut comporter, par exemple, un substrat 2 d'indice très bas (sans couche supérieure 16) et une couche guidante d'indice et d'épaisseur choisis à la limite de la condition de coupure de mode. Pour plus de détails sur cette condition de coupure, on pourra se référer, notamment, au chapitre 8 de l'ouvrage "Light transmission optics (Van Nostrand, New York, 1972) de D. Marcuse".

De tels guides peuvent être de type monomode ou multimodes. Dans ce dernier cas (multimodes), si le nombre de modes est réellement important, et que par conséquent l'épaisseur du guide est très importante, on est ramené à une structure fonctionnant selon les lois de l'optique géométrique. Par ailleurs, ce type de structure guidante peut être très confinant ou peu confinant selon qu'il existe une forte ou une faible différence d'indice entre les couches environnantes. D'autre part, ces structures guidantes peuvent être optimisées de manière à capturer une importante fraction de la lumière, soit dans un unique mode, soit dans une partie privilégiée de ces modes si elle est multimodes, de manière à faciliter l'extraction de la lumière.

Lorsque les moyens de concentration de lumière ne comportent qu'une structure guidante 14, les modes guidés sont acheminés jusqu'aux frontières de la structure. Il est alors possible de collecter la lumière en couplant les extrémités du guide d'onde à un dispositif de collecte approprié, comme par exemple des fibres optiques, ou des objectifs de microscope.

Il est également possible de focaliser le dispositif de collecte à différentes profondeurs à l'intérieur de la structure guidante de manière à isoler des lignes successives de chromophores 5. Un exemple de ce type de focalisation est notamment décrit dans le document "Use of guided spontaneous emission of a semiconductor to probe the optical properties of two-dimensional photonic crystals", Appl. Phys. Lett., vol. 71, pp. 738-740, 1997, D. Labilloy, H. Benisty, C. Weisbuch, T.F. Krauss, R. Houdré, et U. Oesterle.

Afin de permettre la collecte des modes guidés sur un unique côté du support 1, on peut réaliser autour de chaque chromophore des structures à sillons ou rainures qui débouchent dans la structure guidante, de manière à réaliser une espèce de réseau blazé qui canalise la lumière émise vers un côté utile de la structure guidante, où s'effectue la détection.

Comme illustré sur la figure 6, on peut également adjoindre à la structure guidante 14 une autre structure formant un résonateur planaire, du type de celui décrit en référence à la figure 5. On pourra, par exemple, former des sillons (ou rainures) 15 concentriques autour du chromophore 5, de manière à rediriger les modes guidés par la structure guidante 14 vers une zone située au-dessus desdits chromophores 5.

En variante, on peut remplacer les sillons ou rainures 15 par un cristal photonique bidimensionnel ou tridimensionnel constitué de trous ou de colonnes, comme décrit précédemment.

On se réfère maintenant à la figure 7 pour décrire un autre mode de réalisation d'un dispositif selon l'invention, fonctionnant également selon les lois de l'optique ondulatoire.

Dans cet exemple, le dispositif selon l'invention comprend un substrat 2 dont la partie supérieure 10 est formée avec des structures en relief 6, en creux ou en bosses. Préférentiellement, ces structures 6 sont des rainures ou nervures linéaires et parallèles entre elles, par exemple en forme de U ou de V (comme dans l'exemple illustré). La taille de ces structures est de l'ordre de la longueur d'onde de travail. Les sondes peuvent être placées, soit au sommet des structures (comme illustré) soit dans le fond des structures, c'est-à-dire dans l'espace qui joint les parties inférieures des structures 6. On peut également associer des métaux à des supports diélectriques, par exemple en déposant des motifs métalliques sur tout ou partie des nervures ou sillons.

Comme le sait l'homme du métier, de telles structures induisent en certains endroits, et notamment leur sommet, des effets de canalisation de la lumière (voir les flèches sur la figure 7). Par conséquent, en plaçant des éléments (ou pixels) photodétecteurs 17 en dessous des structures en relief 6, auxquelles sont fixés les chromophores 5, il est possible de récolter les photons émis par les chromophores dans les structures et canalisés par celles-ci. La lumière émise dans la direction sensiblement opposée à la direction de la lumière canalisée peut être collectée par d'autres photodétecteurs placés au-dessus des chromophores 5. Comme indiqué précédemment, ces pixels de photodétection peuvent être des éléments CCD formant, par exemple, une matrice de détection.

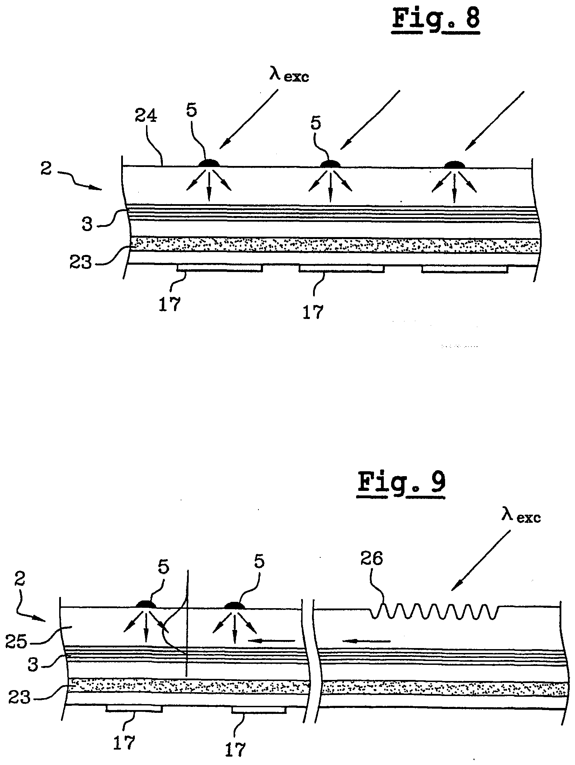

L'intégration d'une matrice de photodétecteurs CCD 17 à un substrat 2 portant des chromophores 5 est représentée de façon plus complète en figure 8 où l'on voit que le substrat 2 comporte, sous les chromophores 5, des moyens réfléchissants 3 à structure multicouches, et une couche absorbante 23 insensible à l'incidence et située entre les couches réfléchissantes 3 et les photodétecteurs 17. Les couches réfléchissantes 3 assurent un maximum de champ d'excitation et d'émission au niveau des chromophores et empêchent la lumière d'excitation de se propager par simple transmission et par diffusion vers la matrice de photodétecteurs 17. La couche de matière absorbante 23, telle que celle utilisée pour les filtres RVB en photographie et dans les réseaux de CCD couleurs, a une bande d'absorption et une épaisseur choisies pour réduire la diaphotie et/ou augmenter le rapport signal sur bruit au niveau des photodétecteurs 17. On gagne ainsi un facteur 10 ou 100 sur l'extinction de la lumière d'excitation, sans trop dégrader la collecte de la fluorescence émise par les chromophores 5.

Ces améliorations s'appliquent aussi à une forme de réalisation de l'invention où le détecteur CCD n'est pas solidaire du substrat 2 portant les chromophores, mais situé à une distance suffisamment faible pour que chaque élément de chromophore soit en regard de pixels suffisamment bien définis.

Dans la variante de réalisation de la figure 9, les chromophores 5 portés par le substrat 2 sont excités par une onde évanescente. Pour cela, le substrat 2 comporte une couche guidante 25 analogue à la couche 14 de la figure 6, ayant un indice plus élevé que celui des couches environnantes et dont la face supérieure est très proche des chromophores 5 à l'échelle de la longueur d'onde d'évanescence de l'onde guidée. La couche guidante 25 est éclairée sur sa tranche (après clivage, ou sciage et polissage), ou au moyen d'un réseau (par exemple, une couche mince 26 de résine photosensible sur la couche guidante dans une zone neutre du substrat 2, avec une modulation d'épaisseur faible, de 1 à 100 nm, permettant de coupler la lumière par illumination au moyen d'un laser à l'angle de couplage adéquat déterminé au moyen de la loi des réseaux. Pour le reste, on retrouve dans le dispositif de la figure 9, les couches réfléchissantes 3 et absorbante 23 déjà décrites en référence à la figure 8.

Une variante de réalisation porte sur la détection de chromophores de couleurs différentes. Les chromophores sont éclairés par une ou deux longueurs d'onde d'excitation λexc1 et éventuellement λexc2 et émettent en réponse deux longueurs d'onde, respectivement λfluo1, λfluo2. Dans ce cas, on peut recueillir séparément, par des filtrages en longueur d'onde tels que décrits ci-dessus, mais individualisés sur chaque pixel ou groupe de pixels, les signaux de chaque couleur sur des pixels ou groupes de pixels proches tous en regard des chromophores 5. Ceci permet outre la détection des deux couleurs, d'utiliser les avantages d'un traitement différentiel des signaux des deux couleurs. Le principe s'étend à plusieurs couleurs.

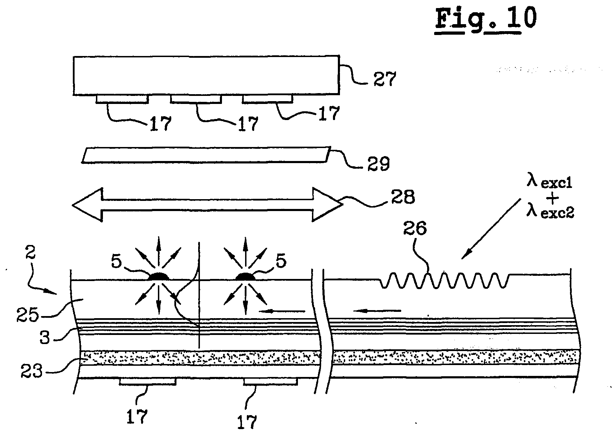

Une autre variante de réalisation représentée schématiquement en figure 10 permet la détection de chromophores de couleurs différentes en chaque point 5 sur le substrat 2. Le dispositif reprend celui de la figure 9 et comprend de plus une seconde matrice 27 de photodétecteurs CCD 17 placée au-dessus des chromophores, avec interposition d'un objectif 28 et d'un filtre réjecteur 29 entre les chromophores et la seconde matrice 27. Les chromophores 5 sont éclairés par deux longueurs d'onde d'excitation λexc1 et λexc2 et émettent en réponse sur deux longueurs d'onde λfluo1 et λfluo2. La couche absorbante 23 du substrat 2 forme un filtre spectral de réjection des longueurs d'onde d'excitation et d'une longueur d'onde λfluo2 émise par les chromophores 5, en laissant passer l'autre longueur d'onde λfluo1 émise par les chromophores 5. Le filtre 29 associé à la seconde matrice 27 arrête les longueurs d'onde d'excitation et la longueur d'onde λfluo1 émise par les chromophores 5, en laissant passer la longueur d'onde λfluo2. Si nécessaire, on peut associer au filtre 29 une couche absorbante 23 du type déjà décrit.

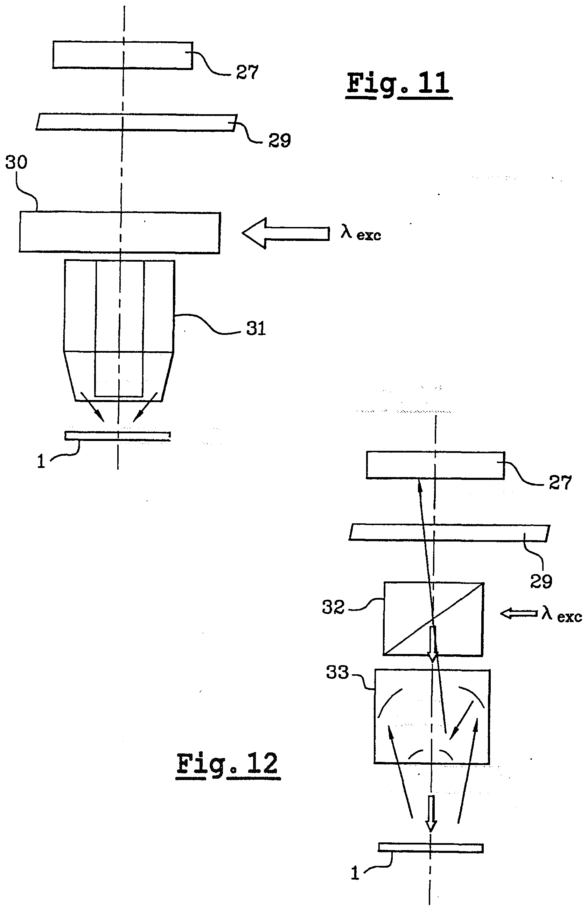

Divers dispositifs de collecte de la lumière sont représentés schématiquement à titre d'exemple uniquement dans les figures 11 à 16.

Le dispositif de collecte de la figure 11 comprend une matrice 27 de photodétecteurs du type CCD ou analogue recevant la luminescence émise par les chromophores portés par le support 1 à travers un filtre 29 de rejection de la lumière d'excitation et de la luminescence parasite émise par le support 1. L'excitation des chromophores par une longueur d'onde λexc a lieu à une incidence non nulle par rapport à la normale au support 1, au moyen d'un coupleur du type à champ sombre, utilisé couramment en épiscopie et métallographie, placé entre le support 1 et le filtre 29. Il reçoit la lumière d'excitation par le côté et la renvoie vers le support à des angles d'incidence supérieurs à l'ouverture numérique de l'objectif 31. L'objectif 31 collecte la luminescence émise par les chromophores dans la direction perpendiculaire au support 1.

Dans la variante de la figure 12, on retrouve la matrice 27 de photodétecteurs et le filtre 29 du dispositif de la figure 11, et l'éclairage du support 1 est réalisé au moyen d'un cube séparateur 32 associé à un objectif à miroir 33 du type Cassegrain (Cassegrain-Schmitt) qui favorise la détection à un angle non nul par rapport à la normale au support 1, comme schématisé par les flèches. L'excitation passe par une ouverture centrale pratiquée dans le miroir de renvoi de l'objectif et tombe quasiment à incidence normale sur le support 1.

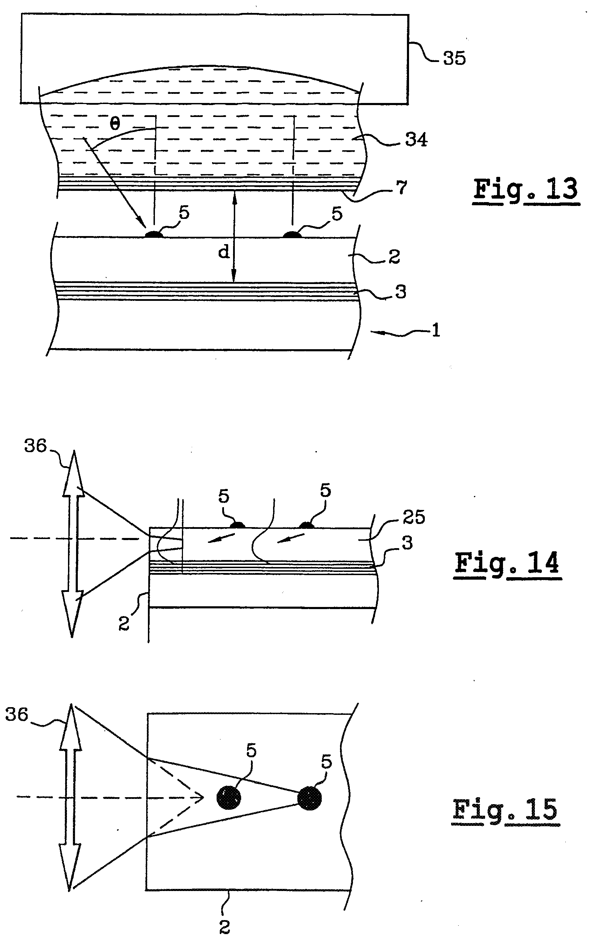

Le dispositif de collecte de la figure 13 correspond à celui évoqué plus haut en référence au dispositif à cavité résonante de la figure 4A : dans ce dispositif, le second miroir 7 est formé sur la face inférieure de la lentille d'entrée 34 d'un objectif 35 du dispositif de collecte. Le trajet optique entre les miroirs 3 et 7 est un multiple de $\lambda_{fluo}/2$.

Dans le dispositif des figures 14 et 15, qui correspond à l'exemple de la figure 6, la luminescence émise par les chromophores 5 dans une couche guidante supérieure 25 du substrat 2 est récupérée à une extrémité par un objectif schématisé en 36. La figure 15 montre la situation dans laquelle les points du guide conjugués du détecteur avantagent la détection sélective d'un des chromophores, sur lequel la mise au point est la meilleure, par rapport aux autres, pour lesquels l'émission n'est pas dans le plan de mise au point et n'est pas concentrée dans le détecteur (ou dans le pixel de la matrice de détecteurs), ce qui permet une discrimination des chromophores situés à différentes distances du bord du guide.

**Revendications**

1. Dispositif de support d'éléments chromophores comprenant :

- un substrat (2) ayant une surface supérieure (24) sur laquelle sont fixés des éléments chromophores (5) destinés à être excités par une lumière d'excitation ($\lambda_{exc}$), et
- des moyens pour augmenter la quantité de lumière émise ($\lambda_{fluo}$) vers un dispositif de collecte par les éléments chromophores (5) en réponse à ladite lumière d'excitation ($\lambda_{exc}$), le dispositif de collecte étant associé à la face arrière du substrat et comprenant une matrice d'éléments photodétecteurs (17) propres, au moins pour certains de ces éléments photodétecteurs (17) à être adressés électroniquement en correspondance d'au moins un élément chromophore (5), à travers le substrat (2), **caractérisé en ce que** lesdits moyens pour augmenter la quantité de lumière émise par les éléments chromophores (5) vers le dispositif de collecte comprennent des moyens réfléchissants (3) à structure multicouches qui sont placés dans le substrat (2) à distance de sa surface supérieure (24), et qui assurent un maximum de champ d'excitation et d'émission au niveau des chromophores et qui empêchent la lumière d'excitation de se propager par simple transmission et par diffusion vers le dispositif de collecte.

**2.** Dispositif selon la revendication 1, **caractérisé en ce que** la matrice d'éléments photodétecteurs (17) est intégrée au substrat.

**3.** Dispositif selon la revendication 1 ou 2, **caractérisé en ce que** certains éléments photodétecteurs (17) sont associés à des zones ayant un signal d'activité de référence, de sorte qu'une mesure différentielle peut être effectuée entre éléments photodétecteurs (17) associés aux chromophores (5) et éléments photodétecteurs (17) associés aux zones de référence.

**4.** Dispositif selon l'une des revendications 1 à 3, **caractérisé en ce que**, pour la détection d'éléments chromophores (5) émettant sur au moins deux longueurs d'onde différentes, il comprend des moyens de filtrage en longueur d'onde associés sélectivement aux éléments photodétecteurs (17) pour une détection des deux longueurs d'onde émises et pour un traitement différentiel des signaux de sortie de ces éléments (17) photodétecteurs.

**5.** Dispositif selon l'une des revendications 1 à 4, **caractérisé en ce qu'**il comprend une couche absorbante (23) insensible à l'angle d'incidence, située entre la matrice d'éléments photodétecteurs (17) et les moyens réfléchissants (3) précités agencés sous les éléments chromophores (5).

**6.** Dispositif selon l'une des revendications 1 à 5, **caractérisé en ce qu'**il comprend deux matrices précitées d'éléments photodétecteurs (17), placées au-dessous et au-dessus respectivement des éléments chromophores (5) et associées à des filtres de réjection (23, 29) pour recevoir la lumière émise par les éléments chromophores (5) sur deux longueurs d'onde distinctes.

**7.** Dispositif selon l'une des revendications 1 à 6, **caractérisé en ce qu'**il comprend un guide d'onde planaire (25) d'amenée de la lumière d'excitation ($\lambda_{exc}$) des éléments chromophores (5).

**8.** Dispositif selon la revendication 7, **caractérisé en ce que** le guide d'onde planaire (25) comprend, dans une zone neutre du substrat (2), un réseau (26) à faible modulation d'épaisseur pour le couplage de la lumière d'excitation ($\lambda_{exc}$).

**9.** Dispositif selon la revendication 7 ou 8, **caractérisé en ce que** le guide d'onde (14, 25) comporte au voisinage de chaque élément chromophore (5), des rainures (15) définissant un réseau blazé agencé pour diriger la lumière collectée par le guide d'onde (14,25) vers le dispositif de collecte.

**10.** Dispositif selon l'une des revendications 1 à 9, **caractérisé en ce que** la face supérieure (24) du substrat (2) comprend une multiplicité de structures tridimensionnelles linéaires parallèles (6), choisies dans un groupe comprenant des rainures et des nervures, de forme en U ou en V ou parabolique ou elliptique et propres à recevoir en chacun de leurs sommets ou entre elles au moins un élément chromophore (5).

**11.** Dispositif selon l'une des revendications 1 à 9, **caractérisé en ce que** le substrat (2) comprend des moyens propres à assurer des résonances localisées par renforcements locaux du champ électromagnétique induit par la présence de structures ou trous nanométriques, réguliers ou non, réalisés dans des métaux choisis, en particulier en argent (Ag) ou en or (Au).

**12.** Dispositif selon la revendication 11, **caractérisé en ce que** lesdits trous ou structures nanométriques sont agencés pour augmenter localement l'émission et/ou l'excitation, par un mécanisme du type de celui survenant dans une diffusion Raman de surface augmentée, en particulier de type SERS.

13. Dispositif selon la revendication 11 ou 12, **caractérisé en ce que** le substrat (2) comprend sur sa surface supérieure (24), un film irrégulier d'argent ou une multiplicité de nanostructures organisées, en argent, ledit film ou lesdites nanostructures étant propres à recevoir les éléments chromophores (5).

**Patentansprüche**

1. Trägervorrichtung für chromophore Elemente mit

    - einem Substrat (2) mit einer oberen Oberfläche (24), auf der chromophore Elemente (5) befestigt sind, die dazu bestimmt sind, durch ein Anregungslicht ($\lambda_{exc}$) angeregt zu werden, und
    - Mitteln zum Erhöhen der Menge des von den chromophoren Elementen (5) als Reaktion auf das Anregungslicht ($\lambda_{exc}$) zu einer Sammelvorrichtung ausgesandten Lichts ($\lambda_{fluo}$), wobei die Sammelvorrichtung der Rückseite des Substrats zugeordnet ist und eine Matrix von Fotodetektorelementen (17) aufweiset, die geeignet sind, soweit wenigstens einige der Fotodetektorelmnente (17) betroffen sind, durch das Substrat (2) hindurch mit Bezug auf wenigstens ein chromophores Element (5) elektronisch angesteuert zu werden, **dadurch gekennzeichnet, daß** die Mittel zum Erhöhen der Menge des von den chromophoren Elementen (5) zur Sammelvorrichtung ausgesandten Lichts reflektierende Mittel (3) mit Mehrschichtstruktur aufweist, die im Substrat (2) in einem Abstand von dessen oberer Oberfläche (24) angeordnet sind und die ein Maximum an Anregungs- und Ausstrahlungsfeld bei den Chromophoren sicherstellen und die verhindern, daß sich das Anregungslicht durch einfache Übertragung und Streuung zur Sammelvorrichtung hin ausbreitet.

2. Vorrichtung gemäß Anspruch 1, **dadurch gekennzeichnet, daß** die Matrix von Fotodetektorelementen (17) im Substrat integriert ist.

3. Vorrichtung gemäß Anspruch 1 oder 2, **dadurch gekennzeichnet, daß** gewisse Fotodetektorelemente (17) Zonen zugeordnet sind, die eine Referenzsignalaktivität haben, so daß eine Differenzmessung zwischen den Chromophoren (5) zugeordneten Fotodetektorelementen (17) und den Referenzzonen zugeordneten Fotodetektorelementen (17) durchgeführt werden kann.

4. Vorrichtung gemäß einem der Ansprüche 1 bis 3, **dadurch gekennzeichnet, daß** sie zum Erfassen von chromophoren Elementen (5), die auf wenigstens zwei verschiedenen Wellenlängen ausstrahlten, Mittel zum Filtern von Wellenlängen aufweist, die selektiv den Fotodetoletorelementen (17) zum Erfassen der beiden ausgestrahlten Wellenlängen und für eine differentielle Verarbeitung der Ausgangssignale dieser Fotodetektorelemente (17) zugeordnet sind.

5. Vorrichtung gemäß einem der Ansprüche 1 bis 4, **dadurch gekennzeichnet, daß** sie eine vom Einfallswinkel unabhängig absorbierende Schicht (23) aufweist, die zwischen der Matrix von Fotodetektorelementen (17) und den vorgenannten unter den chromophoren Elementen (5) angeordneten reflektierenden Mitteln (3) angeordnet sind.

6. Vorrichtung gemäß einem der Ansprüche 1 bis 5, **dadurch gekennzeichnet, daß** sie zwei vorgenannte Matrizen von Fotodetektoren (17) aufweist, die unter bzw. über den chromophoren Elementen (5) angeordnet und Sperrfiltern (23, 29) zugeordnet sind, um das von den chromophoren Elementen (5) auf zwei getrennten Wellenlängen ausgesandte Licht zu empfangen.

7. Vorrichtung gemäß einem der Ansprüche 1 bis 6, **dadurch gekennzeichnet, daß** sie einen planaren Wellenleiter (25) zum Zuführen des Anregungslichts ($\lambda_{exc}$) der chromophoren Elemente (5) aufweist.

8. Vorrichtung gemäß Anspruch 7, dadurch gekenntzeichnet, daß der planare Wellenleiter (25) in einer neutralen Zone des Substrats (2) ein Gitter (26) geringer Dickenmodulation für die Kopplung des Anregungslichts ($\lambda_{exc}$) aufweist.

9. Vorrichtung gemäß Anspruch 7 oder 8, dadurch gekenntzeichnet, daß der Wellenleiter (14, 25) in der Nähe jedes der chromophoren Elemente (5) Rillen (15) aufweist, die ein Blazegitter definieren, das dazu ausgelegt ist, das gesammelte Licht durch den Wellenleiter (14, 25) zur Sammelvorrichtung zu leiten

10. Vorrichtung gemäß einem der Ansprüche 1 bis 9, **dadurch gekennzeichnet, daß** die Oberseite (24) des Substrats (2) eine Mehrzahl dreidimensionaler linearer paralleler Strukturen (6) aufweist, die aus einer Gruppe ausgewählt sind, die Rillen und Rippen in U- oder in V-Form oder in Parabelform oder elliptischer Form aufweist, und die geeignet sind, auf jeder ihrer Spitzen oder zwischen ihnen wenigstens ein chromophores Element (5) auszunehmen.

11. Vorrichtung gemäß einem der Ansprüche 1 bis 9, **dadurch gekennzeichnet, daß** das Substrat (2) Mittel aufweist, die geeignet sind, lokalisiert Resonanzen durch örtliche Verstärkungen des elektromagnetischen Felds, das durch das Vorhandensein von regelmäßigen oder nicht regelmäßigen nanometrischen Strukturen oder Löchern, die aus ausgewählten Metallen, insbesondere aus Silber (Ag) oder aus Gold (Au) gefertigt sind, sicherzustellen.

12. Vorrichtung gemäß Anspruch 11, **dadurch gekennzeichnet, daß** die nanometrischen Löcher oder Strukturen so angeordnet sind, daß sie die Ausstrahlung und/oder Anregung durch einen Mechanismus vom selben Typ wie dem, der in der Raman-Streuung bei erhöhter Oberfläche vorkommt, insbesondere vom Typ SERS, lokal erhöhen.

13. Vorrichtung gemäß Anspruch 12 oder 13, **dadurch gekennzeichnet, daß** das Substrat (2) auf seiner oberen Oberfläche (24) einen unregelmäßigen Film aus Silber oder eine Mehrzahl organisierter Nanostrukturen aus Silber aufweist, wobei der Film bzw. die Nanostrukturen geeignet sind, chromophore Elemente (5) aufzunehmen.

**Claims**

1. A device for supporting chromophoric elements, comprising:

   - a substrate (2) having an upper surface (24) on which are fixed chromophoric elements (5) intended to be excited by an excitation light ($\lambda_{exc}$), and
   - means for increasing the quantity of light ($\lambda_{fluo}$) emitted towards a collecting device by the chromophoric elements (5), in response to said excitation light ($\lambda_{exc}$), the collecting device being associated with the rear face of the substrate and comprising a matrix of photodetector elements (17) liable, at least for certain of these photodetector elements (17), to be electronically addressed in correspondence with at least one chromophoric element (5), through the substrate (2),
   **characterized in that** said means for increasing the quantity of light emitted by the chromophoric elements (5) towards the collecting device comprise multilayer-structure reflecting means (3) that are placed in the substrate (2) remote from upper surface (24) thereof, and that ensure a maximum field of excitation and emission at the chromophores and that prevent the excitation light from propagating by simple transmission and by scattering towards the collecting device.

2. A device according to claim 1, **characterized in that** the matrix of photodetector elements (17) is integrated in the substrate.

3. A device according to claim 1 or 2, **characterized in that** certain photodetector elements (17) are associated with zones having a reference activity signal, so that a differential measurement may be performed between photodetector elements (17) associated with the chromophores (5) and photodetector elements (17) associated with the zones of reference.

4. A device according to one of claims 1 to 3, **characterized in that**, for the detection of chromophoric elements (5) emitting at at least two different wavelengths, it comprises wavelength filtering means selectively associated with the photodetector elements (17) for a detection of the two emitted wavelengths and for differential processing of output signals of these photodetector elements (17).

5. A device according to one of claims 1 to 4, **characterized in that** it comprises an absorbent layer (23) that is insensitive to the angle of incidence, located between the matrix of photodetector elements (17) and the above-mentioned reflective means (3) arranged under the chromophoric elements (5).

6. A device according to one of claims 1 to 5, **characterized in that** it comprises two above-mentioned matrices of photodetector elements (17), placed under and above chromophoric elements (5), respectively, and associated with rejection filters (23, 29) to receive the light emitted by the chromophoric elements (5) at two distinct wavelengths.

7. A device according to one of claims 1 to 6, **characterized in that** it comprises a planar waveguide (25) for supplying the light ($\lambda_{exc}$) for exciting the chromophoric elements (5).

8. A device according to claim 7, **characterized in that** the planar waveguide (25) comprises, in a neutral zone of the substrate (2), a grating (26) of low modulation of thickness for the coupling of the excitation light ($\lambda_{exc}$).

9.  A device according to claim 7 or 8, **characterized in that** the waveguide (14, 25) includes, in the vicinity of each chromophoric element (5), grooves (15) defining a blazed grating arranged so as to direct the light collected by the waveguide (14, 25) towards the collecting device.

10. A device according to one of claims 1 to 9, **characterized in that** the upper face (24) of the substrate (2) comprises a multiplicity of parallel linear three-dimensional structures (6), chosen from a group comprising grooves and ribs, of U- or V- or parabolic or elliptical shape, and liable to receive at each of their apices or between each other at least one chromophoric element (5).

11. A device according to one of claims 1 to 9, **characterized in that** the substrate (2) comprises means liable to ensure localized resonances by local reinforcements of the electromagnetic field induced by the presence of nanometric structures or holes, regular or not, made of chosen metals, in particular silver (Ag) or gold (Au).

12. A device according to claim 11, **characterized in that** said nanometric structures or holes are arranged to increase locally the emission and/or the excitation, by a mechanism of the type of that occurring in a Raman scattering of increased surface, in particular of the SITRS type.

13. A device according to claim 11 or 12, **characterized in that** the substrate (2) comprises on the upper surface (24) thereof an irregular film of silver or a multiplicity of organized nanostructures, made of silver, said film or said nanostructures being liable to receive the chromophoric elements (5).

**COLLECTE**

**Fig. 1**

**Fig. 2A**

**Fig. 2B**

$$Z$$ $|E_{fluo}(z)|^2$

$$Z$$ $|E_{exc}(z)|^2$

$d$

$p>1$
$p\neq m$

$m>1$

$(2m+1)(\lambda_{exc}/4)/\cos(\theta)$

$(2p+1)(\lambda_{fluo}/4)$

**Fig. 3A**

**Fig. 3B**

**Fig. 3C**

17

Fig. 4A

Fig. 4B

Fig. 5

Fig. 6

Fig. 7

## Fig. 8

## Fig. 9

## Fig. 10

Fig. 11

Fig. 12

**Fig. 13**

**Fig. 14**

**Fig. 15**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6008892 A

**Littérature non-brevet citée dans la description**

- **F. BERTUCCI et al.** *Human molecular genetics,* 1999, vol. 8 (9), 1715-1722
- **WEBER et al.** *Science,* 31 Mars 2000, vol. 287, 2451
- **MARTINSSON et al.** *IEEE Photon. Techn. Letters,* 1999, vol. 11, 503
- **LARSSON et al.** *SPIE Proc. 3626,* 1999
- **LUKOSZ, W. ; KUNZ, R.E.** *J. Opt. Soc. Am.,* 1977, vol. 67, 1615-1619
- **LUKOSZ, W.** *J. Opt. Soc. Am.,* 1979, vol. 69, 1495-1503
- **LUKOSZ, W.** *Phys. Rev. B,* 1980, vol. 22, 3030-3038
- **BENISTY et al.** *IEEE J. Quantum Electron.,* 1998, vol. 34, 1612
- **H. BENISTY ; C. WEISBUCH ; D. LABILLOY ; M. RATTIER ; C.J.M. SMITH ; T.F. KRAUSS ; R.M. DE LA RUE ; R. HOUDRÉ ; U. OESTERLE ; D. CASSAGNE.** Optical and confinement properties of two-dimensional photonic crystals. *J. Lightwave Techn.,* 1999, vol. 17, 2063-2077
- **W.L.BARNES ; V.A.SHUBIN et al.** *IEEE Journal of Lightwave Technology,* Novembre 1999, vol. 17, 21-83
- **VAN NOSTRAND ; D. MARCUSE.** Light transmission optics. 1972
- **D. LABILLOY ; H. BENISTY ; C. WEISBUCH ; T.F. KRAUSS ; R. HOUDRÉ ; U. OESTERLE.** Use of guided spontaneous emission of a semiconductor to probe the optical properties of two-dimensional photonic crystals. *Appl. Phys. Lett.,* 1997, vol. 71, 738-740